# EUROPÄISCHE PATENTSCHRIFT

(11) **EP 1 737 194 B1**
(45) Veröffentlichungstag und Bekanntmachung des Hinweises auf die Patenterteilung: **21.10.2009**
(21) Anmeldenummer: 06012263.7
(22) Anmeldetag: 14.06.2006
(51) Int. Cl.: H04L 29/08, H04L 12/46

(54) **Tragbarer Datenträger**
Portable data carrier
Support de données portatif

(30) Priorität: 20.06.2005 DE 102005028393
(43) Veröffentlichungstag der Anmeldung: 27.12.2006
(73) Patentinhaber: Giesecke & Devrient GmbH, 81677 München (DE)
(72) Erfinder: Götze, Frank, 81929 München (DE)

(56) Entgegenhaltungen:
- EP-A- 1 496 480
- ANONYMOUS: "Universal Serial Bus Class Definitions for Communication Devices" USB FORUM, [Online] 19. Januar 1999 (1999-01-19), Seiten 1-110, XP002400427 Gefunden im Internet: URL:http://www.usb.org/developers/devclass _docs/usbcdc11.pdf> [gefunden am 2006-09-25]
- REES J ET AL: "WEBCARD: A JAVA CARD WEB SERVER" SMART CARD RESEARCH AND ADVANCED APPLICATIONS. IFIP WORKING CONFERENCE ON SMART CARD RESEARCH AND ADVANCED APPLICATIONS, 20. September 2000 (2000-09-20), Seiten 197-207, XP001013569

## Beschreibung

Die vorliegende Erfindung betrifft einen tragbaren Datenträger zur Herstellung einer Punkt-zu-Punkt Verbindung mit einem Computer. Ferner betrifft die Erfindung ein Verfahren und ein System zur Kommunikation zwischen dem tragbaren Datenträger und dem Computer.

Tragbare Datenträger können in unterschiedlicher Weise ausgebildet sein, und das Einsatzgebiet solcher Datenträger ist sehr vielfältig. Beispielsweise sind als tragbare Datenträger Chipkarten bekannt, welche insbesondere zum Speichern von Daten vorgesehen sind. Eine spezielle Form der Chipkarte, welche herkömmlich als Mikroprozessorkarte bzw. Smart Card bezeichnet wird, besitzt zusätzlich zu dem Datenspeicher einen Mikroprozessor, um verschiedenartige Anwendungen auf der Smart Card auszuführen. Der Mikroprozessor ist anwendungsabhängig programmierbar, wobei die Funktionalität der Karte durch den verfügbaren Speicherplatz und die Rechenleistung des Prozessors beschränkt wird. Der Implementierung sind somit nur technologische Grenzen gesetzt, die sich mit jeder neuen Generation von integrierten Schaltungen stark erweitern. So werden Smart Cards bereits zur Authentifizierung eines Benutzer eingesetzt, beispielsweise als Zugriffskontrolle auf einen Computer.

Aus der Online-Veröffentlichung "Universal Serial Bus Class Definitions for Communications Devices" USB FORUM, 19.01.1999, S. 1 bis 110, URL (Stand 25.09.2006): http://www.usb.org/developers/devclass_docs/usbcc11.pdf, ist eine Architectur zur Vernetzung beliebiger miteinander kommunizieren- der Komponenten unter Verwendung des USB-Konzeptes bekannt. In Abschnitt 3.8.2 wird dabei die Möglichkeit zur Verwendung von Daten beschrieben, die in ein sogenanntes "Ethernet Networking Control-Model" eingebettet sind.

Aus der EP 1496 480 A1 ist weiterhin ein Netzwerk mit einem PC, einem USB-Hub, einem Handy und einer USB-SIM-Karte bekannt, bei dem sich auf der USB-SIM-Karte ein Webserver befindet. Vorgeschlagen wird, mittels des USB-Hubs oder einer vergleichbaren Umsetzstation den Zugang zu dem Webserver auf der SIM-Karte nicht nur über das Handy, sondern auch über ein anderes Gerät zu ermöglichen, das eine bessere Mensch-Maschine besitzt.

Eine neue Chipkartenarchitektur ermöglicht eine hoch sichere Kommunikation zwischen Computer und Smart Card ohne zusätzliche Implementierung von Software oder Hardware auf dem Computer. Die Verbindung zwischen der Smart Card und dem Computer wird beispielsweise über eine USB-Schnittstelle des Computers hergestellt, wodurch die Smart Card für den Zugriff auf Angebote und Dienste im Internet, wie z.B. den Zugang zu Webportalen und Firmennetzen, oder die Absicherung von Daten schnell, einfach und sicher genutzt werden kann.

Dabei funktioniert die Smart Card als tragbarer WebServer. Die gespeicherten Informationsinhalte sind im Format herkömmlicher Websites (HTML) abgespeichert. Der WebServer selbst kann zudem dynamische HTML-Seiten erzeugen (Servlet), wodurch die Smart Card das Layout der angezeigten Daten bestimmt. Jederzeit und von jedem beliebigen Computer mit USB-Anschluss und vorinstalliertem Internetbrowser können die auf der Karte gespeicherten Daten, wie zum Beispiel Login-Daten, je nach Zugriffsberechtigung wieder aufgerufen und bearbeitet werden. Dabei bedarf es keiner Onlineverbindung mit Kommunikationsdiensten. Die auf dem Computer benötigten Programme sind schon jetzt Standard in den gängigen Computer-Betriebssystemen.

Darüber hinaus kann mit der Internet Smart Card auf Inhalte von Webportalen zugegriffen werden, wobei die Login-Prozedur von der Internet Smart Card gesteuert wird und mittels SSL/TLS Technologie gesichert werden kann. Die Kommunikation zwischen Karte und Computer, bzw. dem Internetbrowser des Computers, erfolgt mittels einer einfachen USB-Einheit, welche einen für den USB-Anschluss des Computers geeigneten USB-Anschluss besitzt. Die Installation zusätzlicher Software auf dem Computer ist nicht nötig, da die Verbindung von USB-Geräten bei herkömmlichen Betriebssystemen mittels Plug & Play erfolgt.

Die Anbindung von Computern an Netzwerke kann durch Netzwerkkarten oder auch über einen USB-Anschluss durch die Nutzung spezieller USB-Klassen erfolgen. Dabei wird bei der USB-Variante ein Adapter eingesetzt, der USB auf der Host-Seite und Ethernet auf der Netzwerkseite unterstützt. Als USB-Klassen kommen hierfür RNDIS oder CDC-Ethernet zum Einsatz. Dabei unterstützen Betriebssystem der Firma Microsoft ausschließlich den RNDIS-Standard und andere Betriebssysteme wie z.B. Linux CDC-Ethernet.

RNDIS ist eine von der Firma Microsoft definierte USB-Klasse zum Transport von Ethernetpaketen über USB, um einen Host mittels eines USB-Ethernet-Adapters in existierende Netzwerke zu integrieren. Zu diesem Zweck beschreibt RNDIS unter anderem Steuerkommandos sowie OIDs (*objective identifiers*). Teil der OIDs sind statistische Informationen, beispielsweise über die Vermittlung von Datenpaketen zwischen USB und Ethernet und über den Zustand bzw. die Aktivitäten des Ethernetanschlusses. Mittels der OIDs sollen insbesondere Daten zur Vermeidung von Fehlern in kollisionsbehafteten Netzen, wie z.B. Ethernet, erfasst werden. Erfasste statistische Informationen sind beispielsweise die Anzahl der gesendeten und empfangenen Datenpakete oder die Häufigkeit der Anzahl von Kollisionen in einer bestimmten Menge von Datenpaketen.

Dabei besitzen die beschriebenen USB-Klassen das Problem, daß das Mitführen der entsprechenden Statistikinformationen für sehr kleine USB-Geräte, wie z.B. eine Smart Card mit USB-Adapter, einen nicht unerheblichen Aufwand in Bezug auf den benötigten Speicherplatz und die Laufzeit bei der Ermittlung der Daten darstellt. Desweiteren ist der Code der USB-Klassen sehr umfangreich und daher nicht ohne weiteres in einer Smart Card implementierbar. Dadurch kann die vorhergehend beschriebene Internet Smart Card beispielsweise nicht ohne weiteres als individueller Netzwerkteilnehmer in einem bestehenden Netzwerk auftreten und somit auch nicht als ein über RNDIS angeschlossener Server in einem Netzwerk fungieren.

Daher ist es Aufgabe der vorliegenden Erfindung, einen tragbaren Datenträger, insbesondere eine Internet Smart Card, für den Einsatz in einem Netzwerk als individuellen Teilnehmer nutzbar zu machen.

Diese Aufgabe wird durch ein Verfahren, einen tragbaren Datenträger und ein System gemäß den unabhängigen Ansprüchen gelöst. In davon abhängigen Ansprüchen sind vorteilhafte Ausgestaltungen und Weiterbildungen der Erfindung angegeben.

Es ist eine Netzwerkstruktur vorgesehen, in der ein Computer und ein tragbarer Datenträger über eine Punkt-zu-Punkt Verbindung miteinander kommunizieren. Das heißt, der tragbare Datenträger und der Computer sind über eine einzelne Leitungsverbindung miteinander verbunden. Der Computer sendet kommunikationsspezifische Anfragen an den tragbaren Datenträger, der diese dann beantwortet. Diese Anfragen sind jedoch netzwerktypisch und umfassen daher z.B. auch Anfragen zu statischen Informationen, die für eine Punkt-zu-Punkt Verbindung irrelevant sind, weil statistische Abweichungen nicht auftreten. Erfindungsgemäß beantwortet nun der tragbare Datenträger Anfragen des Computers, die für die Punkt-zu-Punkt Verbindung nicht benötigt werden, mit vorgegebenen oder ohne Auswertung gewonnenen Antworten.

Anders ausgedrückt entspricht die einzelne Leitungsverbindung einem Master-Slave-System, in dem der Master - in diesem Fall der Computer - stets ein Kommando sendet und der Slave - in diesem Fall der tragbare Datenträger - stets eine Antwort auf dieses Kommando sendet. Erfindungsgemäß wird nun ausgenutzt, daß das Netz bestehend aus dem tragbaren Datenträger und dem Computer eine extrem einfache Struktur besitzt. Der an ein Netzwerk angeschlossene tragbare Datenträger stellt einen sogenannten Endnode im Netzwerk dar. Da Endnodes üblicherweise alle notwendigen Übertragungsprotokolle sowie den gewünschten Endteilnehmer in sich enthalten, ergibt sich bei der Ethernet-Verbindung über USB eine Punkt-zu-Punkt Netzwerkverbindung. Der Computer interpretiert darin den über USB angeschlossenen tragbaren Datenträger als routbaren Netzwerkteilnehmer. Jedoch ist für eine solche Punkt-zu-Punkt Verbindung ein Teil der in den USB-Klassen beschriebenen Statistikinformationenen nicht relevant bzw. konstant. Denn auf der Strecke zwischen Computer und Datenträger können keine Kollisionen *(Ethernet-collisions)* auftreten. Somit entsprechen auch die erfolgreich transportierten Pakete den Gesamtpaketen je Richtung. Dadurch können die in Bezug auf die USB-Klassen RNDIS und CDC-Ethernet beschriebenen Funktionen, wie z.B. die Handhabung von Statistikdaten, auf ein Minimum reduziert werden.

Damit der tragbare Datenträger auch weiterhin als Netzwerkteilnehmer in dem Netzwerk erkennbar ist, können diese Funktionen nicht einfach aus dem Code der USB-Klassen entfernt werden. Jedoch kann der Code trotzdem minimiert werden, indem der tragbare Datenträger erfindungsgemäß auf entsprechende Anfragen des Computers vorgefertigte oder kopierte Informationen ausgibt. Dadurch läßt sich der Code zur Implementierung von RNDIS so verkleinern, daß er auf einem tragbaren Datenträger mit vergleichsweise wenig verfügbarem Speicherplatz, beispielsweise einer SmartCard, implementierbar ist. Dadurch ergibt sich nicht nur der Vorteil eines kleineren Codes, sondern zusätzlich wird weniger Speicherplatz auf dem tragbaren Datenträger belegt. Auch die Programmlaufzeit sinkt, da unnötige Anfragen des Computers mit vorgegebenen oder ohne Auswertung gewonnenen Antworten des Datenträgers beantwortet werden und nicht erst berechnet werden müssen.

Desweiteren kann der Code im Endnode weiter vereinfacht und damit reduziert werden, indem der Zustand des Endnodes konstant auf "verbunden" (*connected*) und "bereit" (*ready*) gesetzt wird.

Besonders bevorzugt ist die Chipkarte als Endnode über RNDIS oder CDC-Ethernet in ein Netzwerk eingebunden, damit der Computer ohne proprietären Treiber mit dem Datenträger basierend auf TCP/IP kommunizieren kann, da die USB-Klassen RNDIS oder CDC-Ethernet auf dem tragbaren Datenträger implementierbar sind.

In einem Ausführungsbeispiel der Erfindung antwortet der tragbare Datenträger auf die Anfrage des Computers, "wie viele Fehler" bei der Kommunikation zwischen dem Computer und dem Datenträger aufgetreten sind, mit der vorgegebenen Antwort "Null". Durch die vorgegebene Antwort wird nicht nur der zu implementierende Code, sondern gleichzeitig die Programmlaufzeit zur Berechnung der Antwort deutlich reduziert.

Die beschriebenen USB-Klassen RNDIS und CDC-Ethernet oder andere können in einem Kommunikationsmodul des tragbaren Datenträgers implementiert sein, der mit einem auf dem Datenträger befindlichen Server verbunden ist, wobei der Server Daten zur Netzwerkkommunikation enthält. In einer Ausgestaltung der Erfindung ist diese datenträgerinterne Verbindung eine rein logische Vollduplexverbindung.

Wie bereits eingangs beschreiben, können die Daten im Server beispielsweise im viel verwendeten HTML-Format bereitgestellt werden, um für einen Internetbrowser des Computers, mit dem der tragbare Datenträger kommuniziert, interpretierbar zu sein. Da das Kommunikationsmodul und der Server vorzugsweise über die rein logische Vollduplexverbindung miteinander verbunden sind, können auf dieser Strecke innerhalb des Datenträgers keine Kollisionen auftreten. Deshalb kann der auf dem Datenträger zu implementierende Code weiter vereinfacht werden, da auch für die Kommunikation zwischen dem Kommunikationsmodul und dem Server keine statistischen Auswertungen erfolgen müssen.

Ist der tragbare Datenträger mit einem Kommunikationsmodul und einem Server ausgestattet, wird in einem zweiten Ausführungsbeispiel auf eine Anfrage des Computers, "wie viele Datenpakete erfolgreich von dem Kommunikationsmodul zu dem Server versendet wurden", diejenige Anzahl von Datenpaketen als Antwort ausgegeben, die der tragbare Datenträger von dem Computer empfangen hat. Dadurch kann die Antwort ohne Auswertung der Übertragung zwischen dem Kommunikationsmodul und dem Server erfolgen. Auch hier wird erneut Code und damit Speicherplatz eingespart und die Programmlaufzeit deutlich reduziert.

Wegen der Einfachheit der Struktur in einem Netz bestehend aus Computer und tragbarem Datenträger kann analog auch das ARP *(Adress Resolution Protocoll*) stark vereinfacht werden. ARP ist ein TCP/IP-Protokoll zum Bestimmen der Hardwareadresse - bzw. physischen Adresse - eines Knotens in einem lokalen Netzwerk. An das Netzwerk wird eine ARP-Anforderung gesendet, und der Knoten mit der entsprechenden IP-Adresse antwortet mit seiner Hardwareadresse. Die Suche ist auch anders herum möglich *(reverse* ARP), so daß bei der Suche nach einer Hardwareadresse die IP-Adresse ausgegeben wird. ARP ist in RFC 826 definiert. In Bezug auf die Erfindung kann auf alle ARP-Anfragen stets die IP-Adresse des Datenträgers oder die IP-Adresse des verbundenen Computers ausgegeben werden oder die Anfrage wird einfach ignoriert. Auf die vorgeschriebene übliche Protokollierung, etwa die Führung eines ARP-Caches, kann verzichtet werden, wodurch weiter Speicherplatz eingespart wird. Die Erzeugung der Antwort kann des weiteren ohne Konsultation von Tabellen erfolgen, wodurch die Programmlaufzeit reduziert wird.

Weitere Merkmale und Vorteile der Erfindung ergeben sich aus der folgenden Beschreibung verschiedener, erfindungsgemäßer Ausführungsbeispiele und Ausführungsalternativen im Zusammenhang mit den begleitenden Zeichnungen. Darin zeigen:
- Figur 1: schematisch ein Netzwerk bestehend aus einem Computer und einer Chipkarte; und
- Figur 2: den Ablauf eines Verfahrens zur Kommunikation zwischen einem Computer und einer Chipkarte.

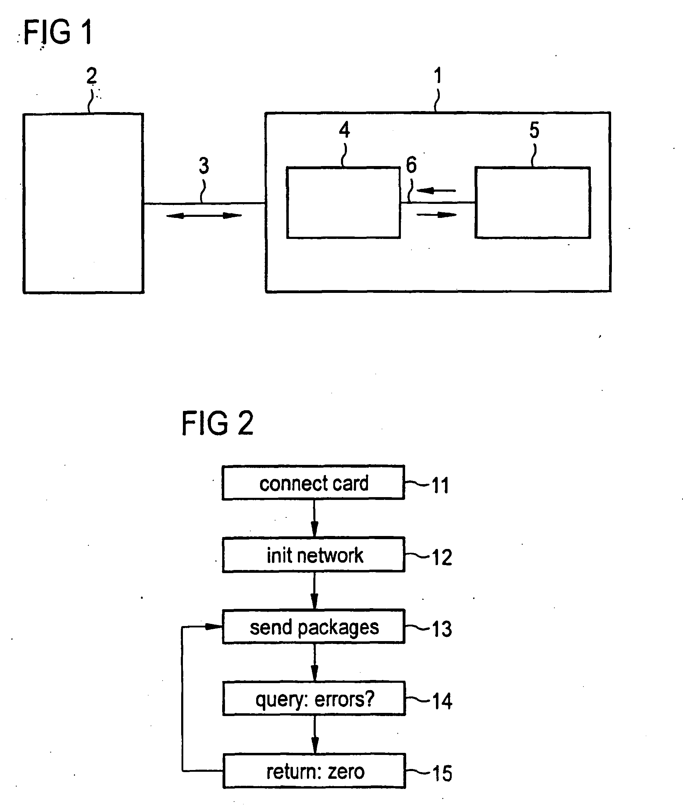

Figur 1 zeigt schematisch eine Chipkarte 1, die mit einem Computer 2 verbunden ist. Zur Verbindung der beiden Komponenten 1, 2 kann eine einzelne Leitungsverbindung 3 eingesetzt werden, welche in der Praxis beispielsweise durch einen - nicht gezeigten - Adapter zur kommunikativen Ankopplung der Chipkarte 1 realisiert wird. Die Kommunikation zwischen dem Computer 2 und der Chipkarte 1 ist üblicherweise so ausgelegt, daß mittels des Computers 2 ein Befehl an die Chipkarte 1 übermittelt wird und die Chipkarte 1 auf diesen Befehl antwortet. Da sowohl der Computer 2 als auch die Chipkarte 1 Netzwerkteilnehmer sind, werden die Daten in Form von Ethernetpaketen über die Leitungsverbindung 3 ausgetauscht.

Die Chipkarte 1 umfaßst neben den - nicht dargestellten - üblichen Komponenten ein Kommunikationsmodul 4 und einen Server 5. Das Kommunikationsmodul 4 der Chipkarte 1 ist zur Implementierung einer USB-Klasse, wie z.B. RNDIS oder CDC-Ethernet, vorgesehen, so daß die Chipkarte 1 als Netzwerkteilnehmer mit dem Computer 2 kommunizieren kann. Dadurch bilden der Computer 2 und die Chipkarte 1 ein Netzwerk, in dem wie in einem herkömmlichen Ethernet eine TCP/ IP-basierende Kommunikation erfolgt.

Das Kommunikationsmodul 4 ist vorzugsweise über eine rein logische Vollduplexverbindung 6 mit dem Server 5 verbunden. Auf dem Server 5 werden Informationen beispielsweise in Form von Websites, also im HTML-Format, hinterlegt oder können dynamisch, etwa als CGI oder Servlet, erzeugt werden. Der Computer 2 dient lediglich dazu, mittels seines Webbrowsers einen Zugriff auf die Informationen des Servers 5 zu ermöglichen. Ist der Computer 2 beispielsweise mit dem Internet verbunden, kann die Chipkarte 1 mit Hilfe des Computers 2 auf das Internet zugreifen. Dabei dient der Computer 2 nur zum Weiterleiten der Daten, nicht hingegen zu derern Verarbeitung. Die Verarbeitung, etwa eine Verschlüsselung von Daten, erfolgt ausschließlich auf der Chipkarte 1. Die Chipkarte 1 agiert dabei als echtes Netzwerkgerät und verschlüsselt selbständig den gesamten Datentransfer mit einem externen Service Provider. Die direkte Kommunikation mit dem externen Server 5 stellt dabei sicher, daß keine sensiblen Daten auf den Computer gelangen. Ein weiterer Vorteil der Hinterlegung der Daten im Server 5 im herkömmlichen HTML-Format besteht darin, daß auf dem Computer 2 keine zusätzliche Software installiert werden muß. Heutzutage umfaßt jeder Computer einen Webbrowser, der zum Zugriff auf den Webserver 5 der Chipkarte 1 ausreicht.

Figur 2 zeigt den Ablauf eines Verfahrens zur Kommunikation zwischen einem Computer und einem tragbaren Datenträger. In einem ersten Schritt 11 (connect card) wird die Chipkarte mit dem Computer verbunden und in einem zweiten Schritt 12 (init network) das Netzwerk bestehend aus der Chipkarte 1 und dem Computer 2 initialisiert. Dann werden, wie beschrieben, in einem dritten Schritt 13 (send packages) Datenpakete zwischen dem Computer 2 und der Chipkarte 1 ausgetauscht.

Da in herkömmlichen Netzwerken Kollisionen auftreten und Datenpakete verlorengehen können, ist vorgesehen, daß der Computer 2 in bestimmten Abständen unterschiedliche kommunikationsspezifische (Kontroll-)Anfragen an die Chipkarte 1 sendet, mit denen derartige Kollisionen oder Datenverluste erkannt werden. In dem in Figur 2 dargestellten Fall stellt der Computer 2 in einem vierten Schritt 14 (query:errors?) die Anfrage an die Chipkarte 1, ob bei der Datenübertragung Fehler aufgetreten sind.

Diese kommunikationsspezifische (Kontroll-)Anfrage ist für die zwischen der Chipkarte 1 und dem Computer 2 bestehende Punkt-zu-Punkt Verbindung jedoch nicht von besonderer Relevanz bzw. technisch irrelevant, da bei einer Punkt-zu-Punkt Verbindung Kollisionen oder Datenverluste nicht auftreten oder nicht zu befürchten oder zumindest auf anderem Wege erkennbar bzw. vermeidbar sind.

Erfindungsgemäß wird eine solche Anfrage mit einer vorgegebenen Antwort beantwortet. Die vorgegebene Antwort wird zweckmäßig durch einen auf der Chipkarte 1 eingerichteten Antwortgenerator oder durch ein Hintergrundsystem erzeugt. Der Antwortgenerator bzw. das Hintergrundsystem erkennen kommunikationsspezifische (Kontroll-)Anfragen ohne Relevanz und geben vorgegebene Antworten aus, ohne daß eine inhaltliche Prüfung der Anfrage erfolgt. Die in Betracht kommenden kommunikationsspezifischen (Kontroll-)Anfragen werden zweckmäßig vorab in der Chipkarte 1 gespeichert.

Auf die Anfrage im vierten Verfahrensschritt wird im fünften Verfahrensschritt 15 (return:zero) daher, ohne daß tatsächlich eine inhaltliche Prüfung der Anfrage erfolgt, die vorgegebene Antwort "Null Fehler" zurückgegeben. Danach fährt das Verfahren mit dem Senden der Daten in Schritt 13 (send packages) fort.

Es können auch andere Anfragen des Computers 2 mit vorgegebenen oder ohne Auswertung gewonnenen Antworten der Chipkarte 1 beantwortet werden. Beispielsweise kann die Chipkarte 1 auf eine Anfrage: "wie viele Datenpakete wurden erfolgreich von dem Kommunikationsmodul 4 an den Server 5 versendet?" als Antwort die Zahl der empfangenen Datenpakete zurückgeben, mithin daß alle von dem Computer 2 empfangenen Datenpakete erfolgreich an den Server 5 übermittelt wurden.

## Patentansprüche

1. Verfahren zur Kommunikation in einem Netzwerk, das mindestens einen Computer (2) und einen tragbaren Datenträger (1) umfaßt, die über eine Punkt-zu-Punkt Verbindung miteinander kommunizieren, wobei der Computer (2) dem Datenträger (1) in bestimmten Abständen netzworktypische, kommunikationsspezifische Anfragen sendet, um Daten zur Vermeidung von Fehlern in dem Netzwerk zu erfassen, **dadurch gekennzeichnet, daß** kommunikationsspezifische Anfragen des Computers (2), die für die Punkt-zu-Punkt Verbindung nur nicht relevante Daten liefern können und deshalb nicht benötigt werden, mit vorgegebenen Antworten des tragbaren Datenträgers (1) beantwortet werden, ohne daß auf die Anfragen eine entsprechend Ermittlung von Daten tatsächlich erfolgt.

2. Verfahren nach Anspruch 1, **dadurch gekennzeichnet, daß** die Kommunikation gemäß dem RNDIS-Standard erfolgt.

3. Verfahren nach Anspruch 1, **dadurch gekennzeichnet, daß** die Kommunikation gemäß CDC-Ethernet erfolgt.

4. Verfahren nach einem der Ansprüche 1 bis 3, **dadurch gekennzeichnet, daß** der tragbare Datenträger (1) auf eine Anfrage des Computers (2), wie viele Fehler bei einer Kommunikation aufgetreten sind, die vorgegebene Antwort "Null" liefert.

5. Verfahren nach einem der Ansprüche 1 bis 4, **dadurch gekennzeichnet, daß** der tragbare Datenträger (1) auf eine Anfrage des Computers (2), wie viele über die Punkt-zu-Punkt Verbindung an den Datenträger (1) übertragene Datenpakete innerhalb des tragbaren Datenträgers (1) weiter versendet wurden, als Antwort die Anzahl der vom Computer (2) über die Punkt-zu-Punkt Verbindung empfangenen Datenpakete liefert.

6. Tragbarer Datenträger (1) mit einem Kommunikationsmodul (4) zur Herstellung einer Punkt-zu-Punkt Verbindung mit einem Computer (2), wobei der Computer (2) dem Datenträger (1) netzwerktypische kommunikationsspezifische Anfragen sendet, um Daten zur Vermeidung von Fehlern in dem Netzwerk zu erfassen, **dadurch gekennzeichnet, daß** das Kommunikationsmodul (4) eingerichtet ist, kömmunikationsspezifische Anfragen des Computers (2), die für die Punkt-zu-Punkt Verbindung nur nicht relevante Daten liefern können und deshalb nicht benötigt werden, mit vorgegebenen Antworten zu beantworten, ohne dass auf die Anfragen eine entsprechende Ermittlung von Daten tatsächlich erfolgt.

7. Tragbarer Datenträger (1) nach Anspruch 6, **dadurch gekennzeichnet, daß** der tragbare Datenträger (1) eine SmartCard ist.

8. Tragbarer Datenträger (1) nach Anspruch 6 oder 7, **dadurch gekennzeichnet, daß** das Kommunikationsmodul (4) ein RNDIS-Modul ist.

9. Tragbarer Datenträger (1) nach Anspruch 6 oder 7, **dadurch gekennzeichnet, daß** das Kommunikationsmodul (4) ein CDC-Ethernet-Modul ist.

10. Tragbarer Datenträger (1) nach einem der Ansprüche 6 bis 9, **gekennzeichnet durch** einen Server (5), der über eine logische Vollduplexverbindung (6) mit dem Kommunikationsmodul (4) verbunden ist.

11. System umfassend einen Computer (2), einen tragbaren Datenträger (1) nach einem der Ansprüche 6 bis 10, und ein Gerät zur Herstellung einer Punkt-zu-Punkt Verbindung zwischen dem Computer (2) und dem tragbaren Datenträger (1).

12. System nach Anspruch 11, **dadurch gekennzeichnet, daß** das Gerät zur kommunikativen Ankopplung des tragbaren Datenträgers (1) eingerichtet ist.

13. System nach Anspruch 11 oder 12, **dadurch gekennzeichnet, daß** das Gerät eingerichtet ist, mit dem Computer (2) über USB und dem tragbaren Datenträger (1) über Ethernet zu kommunizieren.

14. System nach einem der Ansprüche 11 bis 13, **gekennzeichnet durch** eine TCP/ IP-basierende Kommunikation zwischen dem tragbaren Datenträger (1) und dem Computer (2).

## Claims

1. A method for communication in a network which comprises at least a computer (2) and a portable data carrier (1) which communicate with each other via a point-to-point connection, wherein the computer (2) sends network-typical, communication-specific queries to the data carrier (1) at certain intervals in order to acquire data for avoiding errors in the network, **characterized in that** communication-specific queries of the computer (2) which can supply only irrelevant data, and are therefore not needed, for the point-to-point connection are answered with preset responses of the portable data carrier (1) without the queries actually resulting in a corresponding determination of data.

2. The method according to claim 1, **characterized in that** the communication is effected according to the RNDIS standard.

3. The method according to claim 1, **characterized in that** the communication is effected according to CDC Ethernet.

4. The method according to any of claims 1 to 3, **characterized in that** upon a query of the computer (2) as to how many errors have occurred during a communication, the portable data carrier (1) provides the preset response "zero".

5. The method according to any of claims 1 to 4, **characterized in that** upon a query of the computer (2) as to how many data packets transferred to the data carrier (1) via the point-to-point connection were sent further within the portable data carrier (1), the portable data carrier (1) supplies as a response the number of data packets received via the point-to-point connection from the computer (2).

6. A portable data carrier (1) with a communication module (4) for establishing a point-to-point connection with a computer (2), wherein the computer (2) sends network-typical, communication-specific queries to the data carrier (1) in order to acquire data for avoiding errors in the network, **characterized in that** the communication module (4) is set up to answer communication-specific queries of the computer (2) which can supply only irrelevant data, and are therefore not needed, for the point-to-point connection with preset responses without the queries actually resulting in a corresponding determination of data.

7. The portable data carrier (1) according to claim 6, **characterized in that** the portable data carrier (1) is a smart card.

8. The portable data carrier (1) according to claim 6 or 7, **characterized in that** the communication module (4) is an RNDIS module.

9. The portable data carrier (1) according to claim 6 or 7, **characterized in that** the communication module (4) is a CDC Ethernet module.

10. The portable data carrier (1) according to any of claims 6 to 9, **characterized by** a server (5) which is connected with the communication module (4) via a logical full duplex connection (6).

11. A system comprising a computer (2), a portable data carrier (1) according to any of claims 6 to 10, and a device for establishing a point-to-point connection between the computer (2) and the portable data carrier (1).

12. The system according to claim 11, **characterized in that** the device is set up for communicative coupling of the portable data carrier (1).

13. The system according to claim 11 or 12, **characterized in that** the device is set up to communicate with the computer (2) via USB and with the portable data carrier (1) via Ethernet.

14. The system according to any of claims 11 to 13, **characterized by** a TCP/IP-based communication between the portable data carrier (1) and the computer (2).

## Revendications

1. Procédé de communication dans un réseau comprenant au moins un ordinateur (2) et un support de données portable (1) qui communiquent l'un avec l'autre par l'intermédiaire d'une liaison point-à-point, l'ordinateur (2) envoyant à certains intervalles au support de données (1) des demandes typiques du réseau et spécifiques à la communication afin de saisir des données pour l'évitement d'erreurs dans le réseau, **caractérisé en ce que**, à des demandes de l'ordinateur (2) spécifiques à la communication qui ne peuvent livrer que des données non pertinentes pour la liaison point-à-point et qui ne sont donc pas nécessaires, le support de données portable (1) répond par des réponses prédéfinies, sans que les demandes soient réellement suivies d'une recherche de données correspondante.

2. Procédé selon la revendication 1, **caractérisé en ce que** la communication a lieu selon le standard RNDIS.0

3. Procédé selon la revendication 1, **caractérisé en ce que** la communication a lieu selon CDC-Ethernet.

4. Procédé selon une des revendications de 1 à 3, **caractérisé en ce que** le support de données portable (1) répond par la réponse prédéfinie « zéro » à une demande de l'ordinateur (2) demandant combien d'erreurs sont survenues au cours d'une communication.

5. Procédé selon une des revendications de 1 à 4, **caractérisé en ce que** le support de données portable (1), en réponse à une demande de l'ordinateur (2) demandant combien de paquets de données transmis au support de données (1) par la liaison point-à-point ont été retransmis à l'intérieur du support de données portable (1), donne en tant que réponse le nombre de paquets de données reçus par l'ordinateur (2) par l'intermédiaire de la liaison point-à-point.

6. Support de données portable (1) comprenant un module de communication (4) pour l'établissement d'une liaison point-à-point avec un ordinateur (2), l'ordinateur (2) envoyant au support de données (1) des demandes typiques du réseau et spécifiques à la communication afin de saisir des données pour l'évitement d'erreurs dans le réseau, **caractérisé en ce que** le module de communication (4) est configuré de manière à répondre à des demandes de l'ordinateur (2) spécifiques à la communication qui ne peuvent livrer que des données non pertinentes pour la liaison point-à-point et qui ne sont donc pas nécessaires, par des réponses prédéfinies, sans que les demandes soient réellement suivies d'une recherche de données correspondante.

7. Support de données portable (1) selon la revendication 6, **caractérisé en ce que** le support de données portable (1) est une SmartCard.

8. Support de données portable (1) selon la revendication 6 ou 7, **caractérisé en ce que** le module de communication (4) est un module RNDIS.

9. Support de données portable (1) selon la revendication 6 ou 7, **caractérisé en ce que** le module de communication (4) est un module CDC-Ethernet.

10. Support de données portable (1) selon une des revendications de 6 à 9, **caractérisé par** un serveur (5) relié au module de communication (4) par une liaison bidirectionnelle simultanée (6) logique.

11. Système comprenant un ordinateur (2), un support de données portable (1) selon une des revendications de 6 à 10, et un appareil destiné à l'établissement d'une liaison point-à-point entre l'ordinateur (2) et le support de données portable (1).

12. Système selon la revendication 11, **caractérisé en ce que** l'appareil est configuré pour le couplage communicatif du support de données portable (1).

13. Système selon la revendication 11 ou 12, **caractérisé en ce que** l'appareil est configuré pour communiquer avec l'ordinateur (2) par USB, et avec le support de données portable (1) par Ethernet.

14. Système selon une des revendications de 11 à 13, **caractérisé par** une communication basée sur TCP/IP entre le support de données portable (1) et l'ordinateur (2).
